Europäisches Patentamt

European Patent Office

Office européen des brevets

(19)

(11) **EP 0 713 084 B1**

(12) **FASCICULE DE BREVET EUROPEEN**

(45) Date de publication et mention
de la délivrance du brevet:
**01.08.2001 Bulletin 2001/31**

(51) Int Cl.$^7$: **G01L 1/24**, G01D 5/353

(21) Numéro de dépôt: **95402572.2**

(22) Date de dépôt: **16.11.1995**

(54) **Micro-système optique de type rosette de jauges de contraintes à guides diélectriques, pour la mesure d'une contrainte longitudinale en structure plane**

Optisches Mikrosystem des Typs Rosettenspannungslehre mit dielektrischen Leitern zur Messung der longitudinalen Spannung in Planarstruktur

Optical micro-system of rosette strain gauge types with dielectrical guides for measuring a longitudinal strain of a planar structure

(84) Etats contractants désignés:
**DE GB IT**

(30) Priorité: **18.11.1994 FR 9413845**

(43) Date de publication de la demande:
**22.05.1996 Bulletin 1996/21**

(73) Titulaire: **COMMISSARIAT A L'ENERGIE ATOMIQUE**
**75015 Paris (FR)**

(72) Inventeurs:
• **Ferdinand, Pierre**
**F-78800 Houilles (FR)**
• **Magne, Sylvain**
**F-92320 Chatillon (FR)**
• **Rougeault, Stéphane**
**F-92330 Sceaux (FR)**

(74) Mandataire: **Dubois-Chabert, Guy et al**
**BREVATOME**
**3, rue du Docteur Lanceraux**
**75008 Paris (FR)**

(56) Documents cités:
**US-A- 4 806 012**          **US-A- 4 890 922**
**US-A- 5 144 690**          **US-A- 5 361 130**

• **ELECTRONICS LETTERS, vol. 29, no. 11, 27 Mai 1993, GB, pages 964-966, XP000372902 A.D. KERSEY ET AL.: "multi-element bragg-grating based fibre-laser strain sensor."**
• **SMART MATERIALS & STRUCTURES, vol. 1, no. 3, Septembre 1992, BRISTOL, GB, pages 227-232, XP000399877 T. VALIS ET AL.: "fiber-optic fabry-perot strain rosettes."**

**Description**

Domaine technique

La présente invention concerne un micro-système optique de type rosette de jauges de contraintes à guides diélectriques, pour la mesure d'une contrainte longitudinale. Dans la suite de la description, l'expression contrainte longitudinale sera utilisée pour désigner une contrainte n'ayant qu'une seule composante.

Etat de la technique antérieure

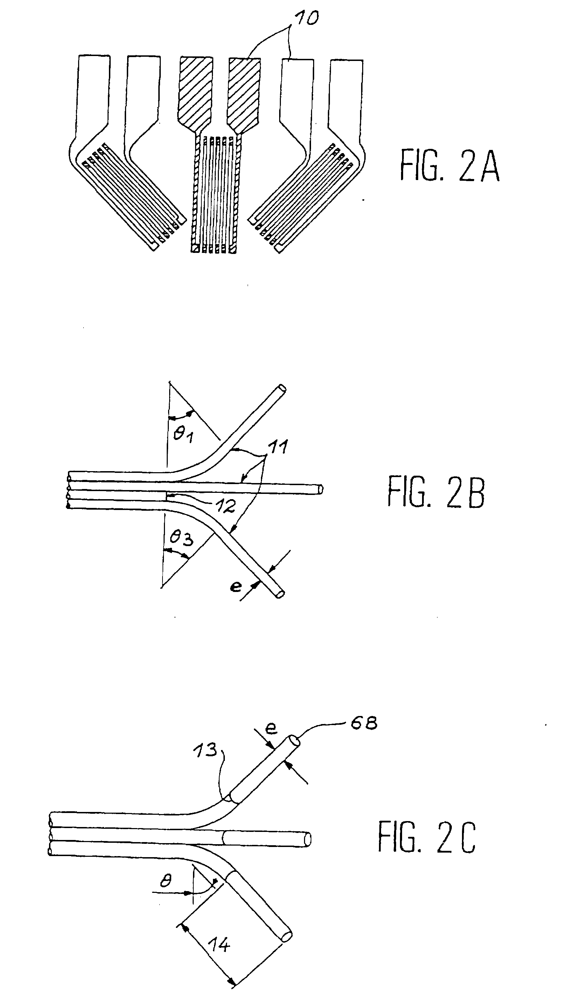

Actuellement, les mesures d'allongement sont réalisées par des jauges ou des rosettes (c'est-à-dire une structure assemblée de plusieurs jauges) à pistes métalliques ou composées de semi-conducteurs, comme représenté sur la figure 2A.

Une jauge mesure une composante d'orientation connue, tandis qu'une rosette permet de déterminer les valeurs des contraintes principales du plan des jauges, ainsi que l'orientation du repère principal par rapport à la disposition des jauges constituant la rosette.

Ces jauges ou ces rosettes sont donc électriques et compensées en température sur un domaine restreint d'utilisation, par un choix judicieux de matériaux.

Face à cela, de nouvelles techniques d'extensométrie apparurent ces dernières années du fait des progrès de l'optoélectronique. Ces techniques reposent sur des phénomènes optiques et non plus électriques : capteurs polarimétriques, à couplage de modes ou interférométriques.

Ces capteurs, comme la plupart des capteurs existants, présentent toutefois une sensibilité à la température qui n'est pas compensée de façon intrinsèque. La solution usuellement préconisée à ce type de problème consiste à comparer la réponse d'un détecteur soumis à la contrainte à déterminer (et donc, à la déformation induite) à la réponse d'un autre détecteur de référence, non soumis à cette contrainte. Le comportement du capteur formé des deux détecteurs devient indépendant des fluctuations de température si ces derniers sont suffisamment proches pour être effectivement à la même température. Dans la plupart des cas, les deux détecteurs sont placés relativement loin l'un par rapport à l'autre pour des raisons de construction mécanique, de sorte que cette hypothèse n'est pas toujours vérifiée en ambiance industrielle.

Un exemple d'une telle impossibilité technique peut être, par exemple, la mesure d'une contrainte appliquée sur une nervure ou un longeron d'une aile d'avion en matériau composite. Dans un tel cas, sachant que les détecteurs sont noyés dans le composite, il faut donc les isoler spatialement afin que l'un mesure une contrainte et que l'autre n'y soit pas soumis. Or, il n'est pas concevable de placer un capteur de contraintes loin de son capteur de référence en température car les écarts de température peuvent être trop importants.

Cette sensibilité croisée (à la température et aux contraintes) limite actuellement l'essor industriel des capteurs à fibres optiques, notamment pour la mesure de contraintes. Une solution technologique à ce problème est donc d'une importance primordiale afin de supprimer ce point de blocage et d'imposer ce nouveau domaine d'instrumentation.

Ce problème de sensibilité croisée n'est pas encore résolu d'une façon satisfaisante (voir, en particulier, l'article récent de E.J. Friebele et A.D. Kersey paru dans Laser Focus World, mai 1994, pages 165-171). Certaines solutions alternatives ont été brevetées qui consistent à compenser la dilatation en température du détecteur (brevet W. W. Morey et W.L. Glomb, WO 91/10151). Le principe revient à incorporer la fibre sensible entre deux pièces constituées de matériaux différents (et donc de coefficients de dilatation thermique différents). Ces auteurs montrent alors qu'il est possible de trouver une constitution géométrique pour laquelle la dilatation résultante appliquée à la fibre de mesure soit nulle. Le problème réside dans le fait que ce système est d'une construction mécanique complexe et nécessite de bien définir les dimensions ainsi que les coefficients de dilatation des matériaux utilisés, de sorte que, dans la pratique, il subsiste toujours une fluctuation en température due aux tolérances de fabrication.

D'autres idées ont été énoncées, comme utiliser les deux modes de polarisation se propageant dans la fibre (soumis toux deux à des réponses en température et contraintes différentes), ou bien encore, utiliser deux détecteurs de réponses spectrales différentes (article de E.J. Friebele et A.D. Kersey).

La limitation vient du fait que les détecteurs présentent des réponses en température et en contraintes très proches car les matériaux mis en oeuvre diffèrent très peu. Une distinction très résolue est donc difficile. De plus, la première solution impose de maintenir la polarisation de la lumière (fibre à maintien de polarisation), ce qui complique considérablement la mise en oeuvre d'un tel dispositif de mesure (connectique complexe) et augmente conjointement son coût.

L'objet de l'invention est de proposer un dispositif permettant de s'affranchir rigoureusement des fluctuations de température d'une façon mathématique, via une procédure de traitement des informations recueillies à partir d'un capteur comprenant des détecteurs placés suffisamment proches les uns des autres pour être à la même température.

Exposé de l'invention

La présente invention concerne un micro-système optique de type rosette de jauges de contraintes à guides diélectriques, destiné à mesurer un ensemble de contraintes appliquées à une pièce, ledit micro-système comprenant au moins une rosette formée d'au moins deux jauges de contraintes à guides diélectriques (J1, J2, J3) d'orientations connues et non parallèles, caractérisé en ce que les jauges de contrainte sont des réseaux de Bragg ($RB_1$, $RB_2$, $RB_3$), en ce que la pièce est une pièce soumise à une contrainte d'une seule composante contenue dans le plan des jauges, et en ce qu'un circuit de calcul, qui délivre un résultat indépendant de la température, permet de déterminer ladite contrainte par résolution du système d'équations suivant :

$$\begin{cases} \lambda_1 - \lambda_1^0 = \xi_1 . \left[ d + r.\cos(2.\alpha) \right] + \xi_2 . (T - T_0) \\ \lambda_2 - \lambda_2^0 = \xi_1 . \left[ d + r.\cos(2.\alpha - 2.\beta_2) \right] + \xi_2 . (T - T_0) \\ \lambda_3 - \lambda_3^0 = \xi_1 . \left[ d + r.\cos(2.\alpha + 2.\beta_1) \right] + \xi_2 . (T - T_0) \end{cases}$$

$\lambda_1$, $\lambda_2$ et $\lambda_3$ étant les longueurs d'onde caractéristiques respectives des trois réseaux de Bragg constituant la rosette, ces longueurs d'onde étant très proches les unes des autres, et $\lambda_1^0$, $\lambda_2^0$, et $\lambda_3^0$ les longueurs d'onde caractéristiques en l'absence de déformations et à une température $T_0$ de référence, $\xi_1$ étant un coefficient reliant la longueur d'onde caractéristique à la déformation et $\xi_2$ un coefficient de dilatation thermique, les deux angles $\beta_1$ et $\beta_2$ quelconques mais connus et non nuls modulo $\pi$, caractérisant la rosette et $\alpha$ étant l'angle que fait l'orientation de la contrainte principale à déterminer avec l'orientation de la jauge de contraintes de référence de la rosette, les paramètres *d* et *r* étant respectivement la demi-somme et la demi-différence des déformations principales à déterminer.

Ainsi selon l'invention, une rosette de jauges de contraintes à guides diélectriques, à fibres optiques notamment, de principe connu, destinée habituellement à mesurer le système de contraintes, d'orientation inconnue a priori, appliqué à une pièce en un point, est utilisé, de manière surprenante, dans le cas d'une pièce soumise à une contrainte n'ayant qu'une composante. La solution d'un système d'équations par un circuit de calcul permet de déterminer la contrainte, indépendamment de la température, si la rosette est formée de deux jauges à fibres optiques de l'angle de positionnement de la rosette sur la pièce si elle est formée de trois jauges. Ce principe est valable pour toutes jauges mesurant une variation de chemin optique sous contrainte, en particulier aux réseaux de Bragg photo-inscrits.

Avantageusement la rosette est formée de trois réseaux de Bragg placés à 120° ou à 45° les uns des autres. Ces trois réseaux peuvent être inscrits simultanément ou successivement par le même faisceau optique d'insolation. Ces trois réseaux peuvent ne pas être inscrits simultanément et peuvent présenter des longueurs d'onde caractéristiques différentes.

Avantageusement les guides diélectriques sont des fibres optiques.

Ce micro-système optique comprend au moins un guide diélectrique, à maintien ou non de polarisation, dans lequel sont incorporées les jauges de contraintes qui sont des transducteurs d'allongement, disposés suivant des orientations connues non parallèles. Les transducteurs d'allongement, qui sont eux-mêmes des guides diélectriques, peuvent être collés en surface, ou noyés au sein d'un matériau support localement plan dont les déformations sont à déterminer.

Dans un exemple de réalisation ces transducteurs sont des réseaux de Bragg qui fonctionnent par effet d'accord de phase et les guides sont monomodes et photosensibles (par exemple matrice germanosilicate ou dopée par des ions de terres rares ($Ce^{3+}$, ...)).

Dans un autre exemple de réalisation les transducteurs fonctionnent par effet interférométrique (interféromètres de Fabry-Perot, Michelson ou Mach-Zehnder) et les guides sont monomodes.

Dans un exemple de réalisation chaque jauge mesure une variation de chemin optique fonction de la contrainte à mesurer, qui induit un décalage spectral (réseau de Bragg).

Dans un autre exemple de réalisation chaque jauge mesure une variation du chemin optique fonction de la contrainte à mesurer qui induit un décalage de franges d'interférences (interféromètres de Fabry-Perot, Michelson, Mach-Zehnder).

Le micro-système optique de l'invention peut être tel que les jauges constituant la rosette sont placées en série sur le même guide diélectrique.

Le microsystème peut également présenter une configuration du type interféromètre de Sagnac équilibré exploitant un coupleur à 50 % de réflexion dans la bande spectrale d'utilisation, cette configuration étant constituée d'un seul plan de guide et permettant d'inclure une rosette entre deux plans d'un matériau.

Le présent micro-système permet ainsi de fournir un signal optique permettant de mesurer une contrainte longitudinale pure (traction, compression), et ceci indépendamment de la température et du positionnement de ce micro-système optique sur le matériau support dont les contraintes sont à déterminer. Le capteur de contraintes longitudinales ainsi formé est donc parfaitement adapté à une ambiance industrielle (chantier, ...) car il n'a plus besoin de procédure de correction en température et peut être disposé arbitrairement dans n'importe quelle position sur une partie plane de la pièce à surveiller (poutre, mât, panneau, ...). Une application particulièrement intéressante consiste à insérer la fibre sensible au sein d'un matériau de type composite. La fibre peut avantageusement rentrer en substitution de plusieurs fibres de renfort (en carbone, typiquement) et conserve l'alignement de ces fibres. Les fibres composant la rosette sont placées au sein de plans parallèles d'orientations différentes. Une telle rosette peut être insérée dans une nervure ou un longeron d'une aile d'avion en composite et l'information de contrainte longitudinale peut être retrouvée quelle que soit l'orientation connue (non-parallèle) des deux ou trois jauges composant cette rosette.

L'information de contrainte peut être traduite optiquement de diverses façons car le micro-système peut exploiter différents principes physiques de détection (interférométrie, accord de phase) dans la mesure où tous ces principes font intervenir le guide diélectrique comme capteur intrinsèque, guide dont l'indice effectif de guidage et la longueur d'interaction dépendent tous deux de la température, en plus des contraintes.

Brève description des dessins

- Les figures 1A, 1B, 1C et 1D illustrent le comportement de filtrage des réseaux de Bragg photo-inscrits ;
- les figures 2A, 2B et 2C sont des exemples types de rosettes de jauges de contraintes connues ;
- les figures 3A, 3B et 3C sont des exemples de configuration de rosettes à trois réseaux de Bragg selon l'invention ;
- la figure 4 illustre la configuration des spectres optiques en fonction de la longueur d'onde ;
- les figures 5A, 5B et 5C illustrent une rosette de Bragg à interféromètre de Sagnac ;
- la figure 6 illustre un montage interférométrique d'inscription de réseaux de Bragg photo-inscrits selon la méthode dite "du prisme" ;
- la figure 7 illustre un exemple de support de rosette à trois jauges ;
- les figures 8A et 8B illustrent un réseau de capteurs à rosettes de Bragg ;
- la figure 9A illustre une jauge à interféromètre de Mach-Zehnder pour la mesure d'une contrainte longitudinale ;
- la figure 9B illustre une rosette à interféromètre de Mach-Zehnder pour la mesure d'une contrainte longitudinale ;
- la figure 10 illustre une fonction de transfert des interféromètres de Michelson et de Mach-Zehnder;
- la figure 11 illustre une rosette à interféromètre de Michelson ;
- la figure 12 illustre les fonctions de transfert typiques d'un interféromètre de Fabry-Perot pour plusieurs coefficients de réflexion ;
- la figure 13 illustre une rosette à interféromètres de Fabry-Perot.

Exposé détaillé de modes de réalisation

Pour mieux décrire le dispositif de l'invention, on va tout d'abord faire quelques rappels concernant les réseaux de Bragg photo-induits.

Le principe des réseaux de Bragg fonctionnant en jauges de contraintes consiste à utiliser la dépendance du spectre de réflexion ou de transmission de ce type de transducteur soumis à une contrainte locale (de traction ou de compression) orientée suivant l'axe d'une fibre. Le réseau ne transmet que la contrainte orientée suivant l'axe local de la fibre.

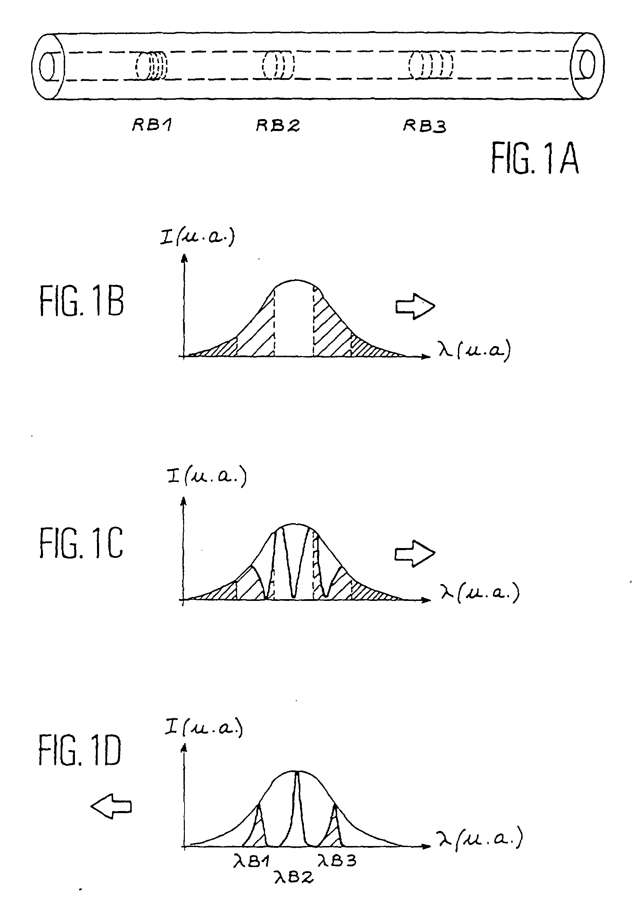

Comme représenté sur la figure 1A, le réseau de Bragg filtre la lumière en réflexion, les ondes (incidentes et réfléchies) restant guidées. La longueur d'onde filtrée (en réflexion) est celle qui correspond à l'accord de phase (condition de Bragg) :

$$\lambda_r = 2.N.\Lambda \tag{1}$$

$\lambda_r$ étant la longueur d'onde réfléchie, $N$ l'indice effectif du mode guidé (par exemple fondamental : $LP_{01}$) et $\Lambda$ la période spatiale du réseau photo-inscrit.

Ainsi les figures 1B à 1D illustrent le comportement de filtrage de trois réseaux de Bragg photo-inscrits RB1, RB2 et RB3 représentés en figure 1A.

Les figures 1B, 1C et 1D sont des courbes de l'intensité en fonction de la longueur d'onde, respectivement du spectre incident, du spectre transmis et du Spectre réfléchi.

Les fibres optiques sont, le plus souvent, monomodes afin que toute l'énergie qui se propage dans un seul mode soit presque intégralement réfléchie à la longueur d'onde d'accord (réflexion supérieure à 95 %). Dans le cas où la fibre est multimode, l'accord en longueur d'onde est différent pour chaque mode.

Ces fibres sont, le plus souvent, à coeur de silice codopé avec de l'oxyde de germanium mais un codopage avec de l'alumine ou des oxydes de terres rares (cérium) a également été publié. La diffusion d'hydrogène ou de deutérium dans le coeur permet également d'accroître la photosensibilité des fibres silice. D'autres verres, de type verres fluorés codopés avec des oxydes de terres rares, par exemple, permettent également de réaliser des réseaux de Bragg photo-inscrits.

L'insolation modifie l'indice local de réfraction de sorte qu'une insolation spatialement périodique crée le réseau, soit par insolation interne (ondes stationnaires internes au guide), soit par insolation externe (franges d'interférences à deux ondes). L'insolation externe permet d'inscrire un réseau de n'importe quelle période spatiale tandis que l'insolation interne ne permet d'inscrire qu'un réseau de même période que la demi-longueur d'onde d'insolation.

Les méthodes d'inscription ont été décrites par de nombreux brevets et publications. La méthode d'inscription externe par interférométrie à deux ondes - la plus utilisée- est décrite dans le brevet WO 86/01303 déposé par W.H. Glenn, G. Meltz et E. Snitzer.

Les transducteurs optiques fondés sur l'emploi de réseaux de Bragg dispensent de multiples avantages : ils sont insensibles aux perturbations électromagnétiques, autorisent le multiplexage (par exemple : en longueur d'onde, dans le cas qui nous préoccupe), sont de dimensions millimétriques (approche micro-système) et conduisent à des résolutions et sensibilités de mesure comparables aux méthodes classiques telles que les jauges de contraintes résistives à fils métalliques ou à semi-conducteurs.

Les capteurs exploitant le principe de la dépendance de la longueur d'onde d'accord du réseau de Bragg en fonction de l'allongement dudit réseau (consécutif à une contrainte) sont également dépendants de la température via le coefficient de dilatation de la matrice (silice le plus souvent) et de la sensibilité thermique de son indice de réfraction. Dans la plupart des applications réelles (hors laboratoire), la température n'est pas contrôlée et il est facilement prouvé que l'allongement dû à la dilatation thermique ne peut être négligé au regard des allongements induits par contrainte que l'on cherche à mesurer.

Le concept de rosette n'est pas nouveau et les rosettes sont utilisées depuis longtemps pour déterminer les valeurs des deux contraintes principales du plan ainsi que la direction du repère principal, si la température T est connue. Le principe d'une rosette de jauges de contraintes à fibres optiques a été décrit dans une publication récente de T. Valis, D. Hogg et R.M. Measures (Smart Mater. Struct., vol. 1, 1992, pages 227-232). Cette rosette utilise soit des interféromètres de Fabry-Perot, soit des interféromètres de Michelson comme jauges de contraintes comme représenté sur les figures 2B et 2C.

Les figures 2A, 2B et 2C sont en effet des exemples types de rosettes de jauges de contraintes permettant de mesurer les deux contraintes principales du plan des jauges ainsi que l'orientation de leur repère principal ; la figure 2A représente une rosette classique (électrique) à pistes métalliques 10 ; la figure 2B représente une rosette optique à interféromètres de Michelson avec des bras de mesure 11 et un bras de référence 12; la figure 2C représente une rosette optique à interféromètres de Fabry-Perot (de cavité formée d'une couche diélectrique 68 déposée en bout de fibre et d'une soudure semi-réflectrice 13). Dans ces deux dernières figures la largeur e est égale à 125 μm par exemple, et la longueur 14 est la longueur sensible.

Ces rosettes ont été exploitées d'une façon classique, c'est-à-dire pour trouver l'orientation du repère principal des contraintes ainsi que les valeurs des deux contraintes principales du plan, la température des fibres de mesure étant supposée connue (ce qui n'est pas le cas dans la pratique).

L'originalité de l'invention réside dans l'exploitation de cette géométrie pour ne mesurer ponctuellement qu'une contrainte mais indépendamment de la température et du positionnement de la rosette dans son plan. Elle est originale en ce sens qu'elle permet de s'affranchir rigoureusement des effets de la température pour ne mesurer que ceux dus aux efforts de traction/compression à déterminer (ce qui est plus performant que les concepts précédemment cités) à la condition que la contrainte soit purement longitudinale dans le cas d'une rosette simple.

L'avantage tient à ce que l'information peut être retrouvée quel que soit le positionnement de la rosette sur la surface ou au sein du matériau support et, qu'en effectuant la mesure ponctuellement, il n'y a plus besoin de deuxième fibre de référence pour s'affranchir de la température. Cette solution résout donc le problème de la sensibilité croisée aux contraintes et à la température dans le cas d'une contrainte longitudinale (nervure, longeron, mat, poutre, ...) et résout le problème de trouver une référence fiable en température.

Bien que ce concept de micro-système soit démontré ici en exploitant des fibres optiques (premier niveau d'intégration), il est réalisable en optique intégrée (deuxième degré d'intégration).

L'invention consiste à mesurer les différences de longueurs d'onde caractéristiques de deux (ou trois) réseaux. Ces réseaux peuvent être placés, a priori, suivant n'importe quelle orientation mais non parallèlement les uns aux autres.

Si la rosette n'est constituée que de deux réseaux, il est possible d'en déduire la contrainte longitudinale exercée, indépendamment de la température, l'angle de positionnement de cette rosette par rapport à l'orientation de cette contrainte étant supposé connu.

Si, par contre, la rosette est constituée de trois réseaux, il est possible, cette fois, d'en déduire la contrainte longitudinale exercée, indépendamment de la température et du positionnement (c'est-à-dire de l'angle que fait l'orientation de la rosette par rapport à la direction de la contrainte à déterminer).

En pratique, ces trois réseaux composant la rosette sont généralement placés précisément soit à 120°, soit à 45° les uns des autres afin de faciliter le dépouillement des résultats par l'emploi de formules mathématiques plus simples.

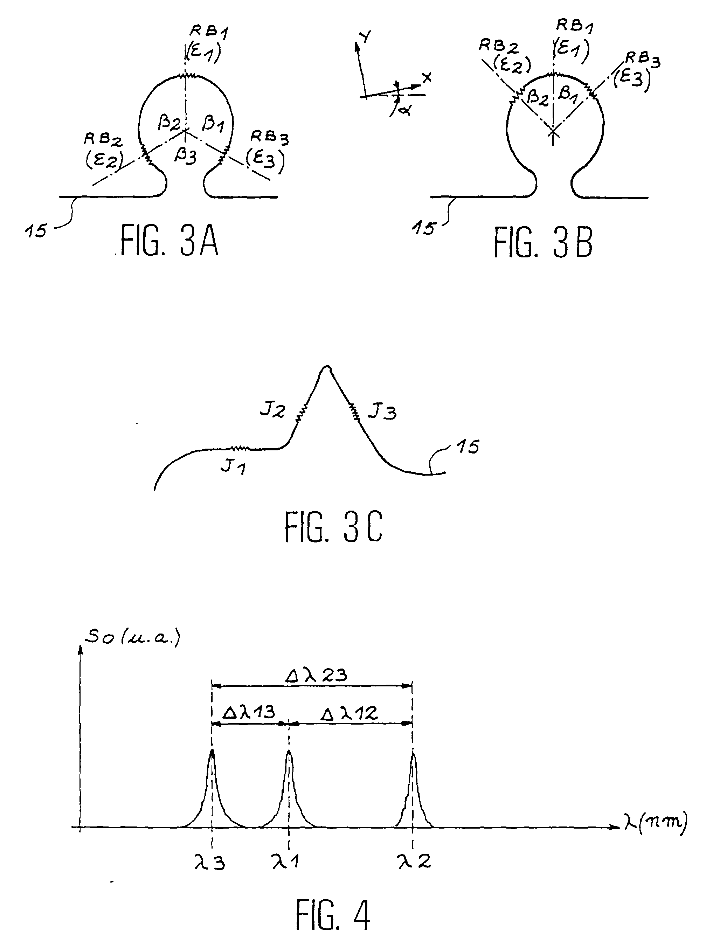

Les figures 3A, 3B et 3C représentent des exemples de configuration de rosettes à trois réseaux de Bragg $RB_1$, $RB_2$ et $RB_3$ mesurant respectivement les déformations $\varepsilon_1, \varepsilon_2$ et $\varepsilon_3$ respectivement pour une rosette à 120°, une rosette à 45° et une rosette à 120° à réseaux de Bragg, avec trois jauges J1, J2 et J3, en utilisant une fibre optique silice 15 (photo-inscriptible).

Toutefois, pour des raisons de tolérances de fabrication, les angles de positionnement ne seront pas toujours proches de ces valeurs idéales de sorte que la résolution numérique d'un système d'équations (3) de la rosette défini ci-après sera appliquée.

Du point de vue de l'interrogation spectrale, plusieurs solutions sont envisageables. On peut en citer deux, à titre d'exemples :

- Les trois réseaux sont inscrits simultanément ou successivement par le même faisceau optique d'insolation (ils possèdent alors la même fonction de transfert, et donc la même longueur d'onde caractéristique) : la mesure du maximum spectral n'est plus possible simplement avec cette technique puisqu'il y a recouvrement des spectres caractéristiques. Dans ce dernier cas, une technique d'interrogation plus complexe est requise, en l'occurrence une interrogation résolue dans le temps, par exemple, comme décrit dans le brevet US-4 996 419 de W.W. Morey.

- Les trois réseaux ne sont pas inscrits simultanément et peuvent présenter des longueurs d'onde caractéristiques différentes : cette solution est plus simple à mettre en oeuvre du point de vue de la mesure et du démultiplexage.

Dans les deux cas, les réseaux doivent être inscrits dans des fibres présentant les mêmes coefficients de dilatation thermique. Cette condition est évidemment réalisée si les fibres sont strictement identiques (issues de la même préforme). Ainsi, si l'on pose comme hypothèse que les transducteurs de Bragg composant la rosette sont suffisamment proches les uns des autres pour être à la même température, la mesure des différences de longueurs d'onde caractéristiques permet de déterminer la contrainte de traction indépendamment de la température.

Dans ce qui suit, on va étudier cette approche plus en détails.

$\lambda_1, \lambda_2$ et $\lambda_3$ sont les longueurs d'onde caractéristiques respectives des trois réseaux de Bragg constituant la rosette et $\lambda_1^0, \lambda_2^0$ et $\lambda_3^0$ les longueurs d'onde caractéristiques en l'absence de déformations et à une température $T_0$ de référence.

Les variations de longueurs d'onde peuvent s'écrire, pour tous les réseaux ($i$ = 1, 2 et 3) :

$$\frac{\Delta\lambda}{\lambda} \approx 0,78 \cdot \varepsilon[\mu\varepsilon] + 8,6.10^{-6}.\Delta T[\text{K}] - 5,2.10^{-6}.\Delta P[MPa] \tag{2}$$

$$\Delta\lambda_i = \lambda_i - \lambda_i^0 = \xi_1.\varepsilon_i + \xi_2.(T-T_0) + \xi_3.(P-P_0)$$

où $\xi_1$ est le coefficient reliant la longueur d'onde caractéristique à la déformation et $\xi_2$ est le coefficient de dilatation thermique. Le coefficient $\xi_1$ (qui dépend de $\lambda$) peut être mesuré expérimentalement avec précision. Il vaut environ 1 pm par $\mu\varepsilon$ (1 $\mu\varepsilon$ correspond à une déformation de 1 $\mu$m/m) à la longueur d'onde de 1300 nm pour une fibre monomode germanosilicate. Le coefficient $\xi_2$ est de l'ordre de 10 pm/K et le coefficient $\xi_3$ est généralement négligé; il vaut -5pm/MPa..

Pour simplifier, les trois longueurs d'onde $\lambda_1, \lambda_2$ et $\lambda_3$ sont considérées comme très proches les unes des autres (à quelques nm de décalage).

On obtient alors le système suivant d'équations :

$$\begin{cases} \lambda_1 - \lambda_1^0 = \xi_1 \cdot \left[ d + r.\cos(2.\alpha) \right] + \xi_2 \cdot (T - T_0) \\ \lambda_2 - \lambda_2^0 = \xi_1 \cdot \left[ d + r.\cos(2.\alpha - 2.\beta_2) \right] + \xi_2 \cdot (T - T_0) \\ \lambda_3 - \lambda_3^0 = \xi_1 \cdot \left[ d + r.\cos(2.\alpha + 2.\beta_1) \right] + \xi_2 \cdot (T - T_0) \end{cases} \qquad (3)$$

Les deux angles $\beta_1$ et $\beta_2$ caractérisant la rosette peuvent être quelconques (mais non nuls modulo $\pi$) et $\alpha$ est l'angle que fait l'orientation de la contrainte principale ($\sigma_x$) à déterminer avec l'orientation de la jauge de contraintes de référence de la rosette (ici, la jauge J1). Cet angle $\alpha$ est, a priori, inconnu et est fonction des tolérances de positionnement (position de la jauge-rosette sur la surface du matériau support).

Les paramètres $d$ et $r$ sont respectivement la demi-somme et la demi-différence des déformations principales à déterminer.

Si la rosette est construite avec des angles $\beta_1$ et $\beta_2$ quelconques mais parfaitement connus après fabrication, il est possible d'en déduire la contrainte principale de traction pure en résolvant numériquement le système (3).

Les équations de déformation permettent de formuler la contrainte de traction suivant la forme analytique simple :

$$\sigma_x = \left( \frac{2.E}{1+\nu} \right) \cdot \left| r(\lambda_1, \lambda_2, \lambda_3) \right| \qquad (4)$$

où $E$ et $\nu$ sont respectivement le module d'Young et le coefficient de Poisson du matériau support ou hôte (matériau composite, métal, béton, ...).

On appelle $f(T) = \xi_2 \cdot (T - T_0)$; si la rosette est construite précisément suivant un angle à 120°, l'expression de $r$ est donnée par la formule suivante :

$$r(\lambda_1, \lambda_2, \lambda_3) = \frac{1}{2} \cdot \frac{[\lambda_1 - \lambda_1^0 - f(T)) - (\lambda_2 - \lambda_2^0 - f(T))] + (\lambda_3 - \lambda_3^0 - f(T))]}{\xi_1 \cdot \cos(2.\alpha)}$$

soit, finalement, après simplification :

$$r = \frac{1}{3} \cdot \frac{[(\lambda_1 - \lambda_1^0)] + [(\lambda_2 - \lambda_2^0)] + [(\lambda_3 - \lambda_3^0) - (\lambda_2 - \lambda_2^0)]}{\xi_1 \cdot \cos(2.\alpha)} \qquad (5)$$

Et, de même :

$$tg(2.\alpha) = \sqrt{3} \cdot \frac{[(\lambda_1 - \lambda_1^0 - f(T)) - (\lambda_3 - \lambda_3^0 - f(T))]}{[(\lambda_2 - \lambda_2^0 - f(T)) - (\lambda_1 - \lambda_1^0 - f(T))] + [(\lambda_2 - \lambda_2^0 - f(T)) - (\lambda_3 - \lambda_3^0 - f(T))]}$$

soit, une fois la simplification effectuée :

$$tg(2.\alpha) = \sqrt{3} \cdot \frac{[(\lambda_1 - \lambda_1^0) - (\lambda_3 - \lambda_3^0)]}{[(\lambda_2 - \lambda_2^0) - (\lambda_1 - \lambda_1^0)] + [(\lambda_2 - \lambda_2^0) - (\lambda_3 - \lambda_3^0)]} \qquad (6)$$

On observe bien que $r$ et $\alpha$ sont indépendants de $T$, puisque les deux équations qui les caractérisent sont exprimées en terme de différences spectrales (écarts de longueurs d'onde entre les sommets des fonctions de transfert de réseaux de Bragg pris deux-à-deux). Remarquons également que r et $\alpha$ sont également indépendants de la pression P qui, comme la température, s'exerce uniformément dans toutes les directions de l'espace. Or, les deux équations précédentes {(5) et (6)} permettent de formuler la contrainte directement à partir des longueurs d'onde mesurées,

puisque:

$$|r| = \frac{1}{3.\xi_1} \cdot \left|(\lambda_1 - \lambda_1^0) - (\lambda_3 - \lambda_3^0)\right| \cdot \sqrt{3 + (2.x-1)^2}$$

avec :

$$x = \frac{(\lambda_2 - \lambda_2^0) - (\lambda_3 - \lambda_3^0)}{(\lambda_1 - \lambda_1^0) - (\lambda_3 - \lambda_3^0)}$$

La contrainte de traction pure exercée sur le matériau s'écrit donc finalement, dans le cas de la rosette à trois jauges exactement à 120° :

$$\sigma_x = \left(\frac{2.E}{1+v}\right) \cdot \left|\frac{\Delta\lambda_{13} - \Delta\lambda_{13}^0}{3.\xi_1}\right| \cdot \sqrt{3 + \left[2.\left(\frac{\Delta\lambda_{23} - \Delta\lambda_{23}^0}{\Delta\lambda_{13} - \Delta\lambda_{13}^0}\right) - 1\right]^2} \qquad (7)$$

De la même façon, pour une rosette à trois jauges exactement à 45°:

$$\sigma_x = \left(\frac{E}{1+v}\right) \cdot \left|\frac{\Delta\lambda_{23} - \Delta\lambda_{23}^0}{\xi_1}\right| \cdot \sqrt{1 + \left[2.\left(\frac{\Delta\lambda_{31} - \Delta\lambda_{31}^0}{\Delta\lambda_{23} - \Delta\lambda_{23}^0}\right) + 1\right]^2} \qquad (8)$$

avec : $\Delta\lambda_{31} = \lambda_3 - \lambda_1$ et $\Delta\lambda_{31}^0 = \lambda_3^0 - \lambda_1^0$; et ainsi de suite, par permutations circulaires.

Si les longueurs d'onde $\lambda_1, \lambda_2$ et $\lambda_3$ sont séparées de plus de quelques nm (mais toujours dans une même bande spectrale de quelques dizaines de manomètres de large), les équations (7) et (8) doivent être réécrites en substituant le terme :

$$(\lambda_1 - \lambda_1^0) - (\lambda_2 - \lambda_2^0) = \Delta\lambda_{12} - \Delta\lambda_{12}^0$$

par le terme :

$$(\lambda_1 - \lambda_1^0) - (\lambda_2 - \lambda_2^0) \cdot \frac{\lambda_1}{\lambda_2}$$

et de même :

$$(\lambda_1 - \lambda_1^0) - (\lambda_3 - \lambda_3^0) \cdot \frac{\lambda_1}{\lambda_3}$$

et:

$$(\lambda_2 - \lambda_2^0) \cdot \frac{\lambda_1}{\lambda_2} - (\lambda_3 - \lambda_3^0) \cdot \frac{\lambda_1}{\lambda_3},$$

le coefficient $\xi_1$ étant défini à la longueur d'onde $\lambda_1$.

Le capteur peut être interrogé optiquement de façon continue ou de façon impulsionnelle, à l'aide d'une source spectralement plus large ou, a contrario, beaucoup plus fine que la largeur spectrale du réseau de Bragg interrogé.

Deux conceptions peuvent être retenues :

. Capteur passif: le signal optique mesuré correspond à la réflexion (ou à la transmission) d'un signal d'interrogation à large bande spectrale, voire à spectre fin accordable ;

. Capteur actif : le signal optique mesuré correspond à l'émission du capteur laser interrogé par un signal optique de pompage (à une longueur d'onde différente de l'émission laser).

Dans les deux cas, la méthode de détection optique est identique. Celle-ci consiste à observer les spectres de réflexion, voire de transmission (capteurs passifs), ou de réémission (capteurs actifs -lasers) afin d'en déduire les longueurs d'onde caractéristiques.

La figure 4 illustre une courbe des spectres optiques SO en fonction de la longueur d'onde $\lambda$, ce qui permet de définir les différentes longueurs d'ondes caractéristiques. Les déformations différentielles entre chaque réseau peuvent être mesurées directement à partir du spectre optique.

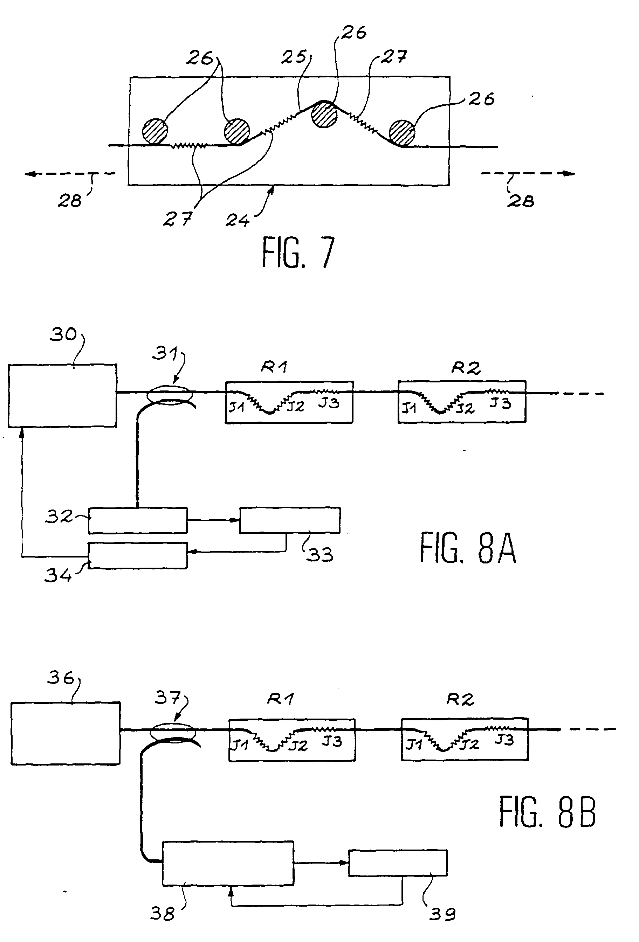

Deux constitutions peuvent être envisagées suivant que le procédé d'interrogation des réseaux fonctionne en réflexion ou en transmission. Le fonctionnement en réflexion est illustré sur les figures 8A et 8B.

En revanche, il est possible de réaliser une boucle (interféromètre de Sagnac) grâce à un coupleur optique dont le taux de couplage est proche de 50 % de réflexion dans la bande spectrale d'intérêt. Cet interféromètre équilibré (50 %) constitue un "miroir à fibre" selon un fonctionnement décrit par K.O. Hill et al. dans une publication (Electr. Lett., vol. 23, n° 9, 1987, pages 465466). L'interféromètre de Sagnac permet alors d'inverser le fonctionnement de la rosette qui d'en réflexion fonctionne alors en transmission sitôt que la longueur de cohérence de l'onde filtrée excède l'écart spectral entre les deux réseaux extrêmes.

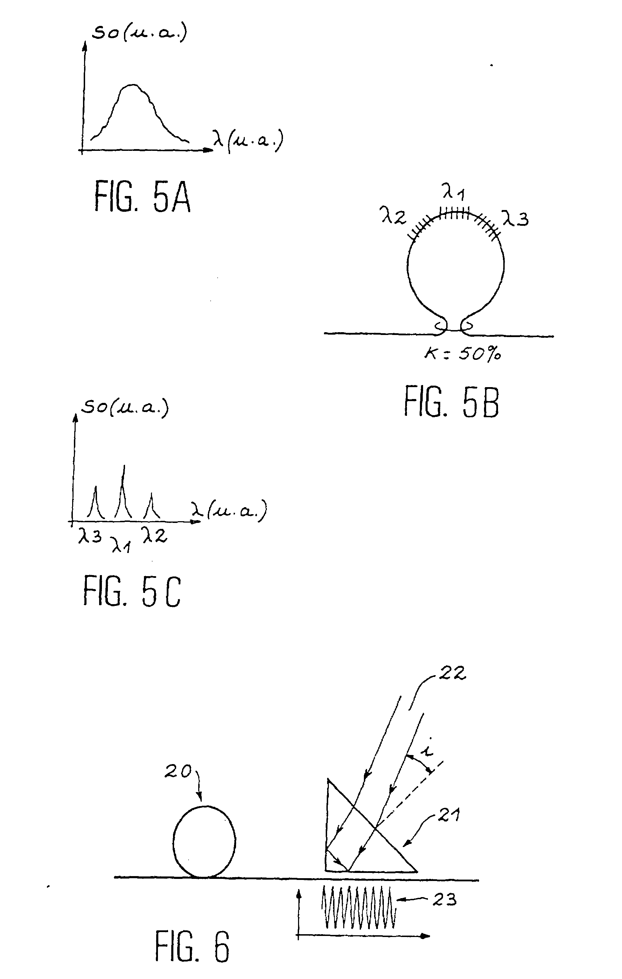

Les figures 5A, 5B et 5C illustrent une rosette de Bragg à interféromètre de Sagnac, opérationnelle en transmission, avec une source optique incidente à spectre large représenté en figure 5A, avec un coupleur représenté en figure 5B et un spectre de raies observé en transmission représenté en figure 5C.

Le deuxième avantage de l'interféromètre de Sagnac réside dans le fait que le micro-système à fibre est constitué d'un seul plan de fibre. Il semble alors possible de noyer la rosette entre deux couches d'un matériau composite, par exemple.

D'un point de vue pratique, la méthode de mesure peut faire intervenir une solution "tout-optique" (incluant un filtre de transmission ou un interféromètre, fournissant une transmission proportionnelle à la longueur d'onde mesurée) ou optique et électronique (mettant en oeuvre une acquisition par échantillonnage et traitement de données par processeur spécialisé dédié).

L'avantage d'utiliser des réseaux de mêmes caractéristiques réside dans le fait que l'insolation devant être identique pour tous les réseaux, il n'y a pas à modifier les réglages du banc d'inscription. En revanche, il est plus facile de distinguer les fonctions de transfert des fibres lorsque celles-ci sont bien séparées (les signaux optiques ne se recouvrent pas) et donc, il semble tout de même préférable de pratiquer différentes insolations pour créer des longueurs d'onde caractéristiques différentes.

Les fibres utilisées peuvent être ou non à maintien de polarisation. En absence de maintien de polarisation, les biréfringences de contraintes induisent un état de polarisation mal défini et une mesure de contraintes moins précise que si les fibres présentent un maintien de polarisation comme l'ont noté T. Valis et al.

On va à présent considérer plusieurs réalisations pratiques.

La réalisation de la rosette se décompose en deux parties : la partie inscription des réseaux de Bragg et la partie incorporation sur, ou au sein, d'un matériau support.

Inscription des réseaux constitutifs de la rosette

Les méthodes d'inscription des réseaux de Bragg sont décrites dans de nombreux brevets et publications (méthodes d'interférométrie à deux ondes, masquage par réseau plan, défilement de la fibre sous une fente, ...) ; en particulier le brevet WO 86/01303 de W.H. Glenn, G. Meltz et E. Snitzer.

Un très grand nombre de publications décrivent la technologie d'inscription, en particulier:

G. Meltz et al., Opt. Lett., vol. 14, n° 15, 1989, pages 823-825,
K. O. Hill et al., Appl. Phys. Lett., vol. 62, n° 10, 1993, pages 1035-1037,
K. O; Hill et al., Electr. Lett., vol. 27, n° 17, 1991, pages 1548-1551,
G. Meltz et al., SPIE 1516, 1991, pages 185-199,
S. Legoubin et al., JNOG 92, pages 175-177,
M.M. Broer et al., Opt. Lett., vol. 16, n° 18, 1991, pages 1391-1393.

La fibre destinée à être insolée est dégainée de son revêtement (dans le cas où celle-ci est constituée d'époxy-acrylate : en la plongeant dans du dichlorométhane, par exemple).

Ensuite, trois insolations sont pratiquées à différentes périodes spatiales formant ainsi les trois réseaux. Toutes les méthodes d'insolation décrites précédemment sont exploitables mais la méthode qui semble la plus appropriée dans notre cas est la méthode du prisme à angle droit, car elle est plus simple à instrumenter. En effet, cette méthode permet de ne contrôler qu'un seul angle d'incidence, en l'occurrence, l'angle d'incidence du faisceau d'insolation sur la face hypoténuse du prisme.

La figure 6 illustre un montage interférométrique d'inscription de réseaux de Bragg photo-inscrits selon la méthode dite "du prisme", avec une fibre photosensible 20, un prisme (à angle droit) 21 sur lequel arrive un faisceau ultraviolet d'insolation (faible divergence) 22, avec une représentation des franges d'interférence 23.

L'angle d'incidence sur la face du prisme est relié à la longueur d'onde de réflexion du réseau par la relation suivante :

$$i = \arcsin\left( n_p . \sin\left( \frac{\pi}{4} - \arcsin\left[ \frac{N.\lambda_{UV}}{n_p.\lambda_B} \right] \right) \right) \qquad (9)$$

où $n_p$ est l'indice du prisme à la longueur d'onde d'insolation ($\lambda_{UV}$) et $N$ est l'indice effectif du mode guidé (à la longueur d'onde de Bragg ($\lambda_B$)) déjà défini dans la relation (1).

Ainsi, soit en scindant le faisceau d'insolation en trois faisceaux suivant trois prismes orientés suivant des incidences angulaires légèrement différentes, soit en tournant successivement avec précision (platine de rotation) le même prisme d'un angle approprié, les trois réseaux de Bragg de légères différences de longueurs d'onde caractéristiques (quelques nm, par exemple) sont insolés, simultanément dans le cas du premier procédé et séquentiellement dans le second cas.

La zone spatiale insolée est importante (quelques mm de long sur 100 μm de large typiquement) de sorte que les contraintes de positionnement de la fibre sur le support d'insolation ne sont pas limitantes.

La taille de la rosette est fonction du rayon de courbure des fibres. Une rosette de 2 cm de large sur 5 cm de long est aisément réalisable et il semble possible de réaliser une rosette de plus petites dimensions (6x9 mm$^2$) selon la publication de H.W. Haslasch et J.S. Sirkis (Appl. Opt., vol. 30, n° 28, 1991, pages 4069-4080).

Incorporation du support

Après insolations, la rosette doit pouvoir être manipulée sans risque de détérioration tout en conservant les orientations précises d'insolation.

Les fibres sont ensuite collées sur un support flexible. Il est aussi possible de noyer la rosette prépositionnée dans un liquide polymérisant afin de solidifier le montage et le rendre manipulable en situation industrielle.

La figure 7 illustre un exemple de support de rosette à trois jauges pour le positionnement de la fibre à insoler, avec un support flexible 24, une fibre optique silice 25, des supports de positionnement 26, des réseaux de Bragg photo-inscrits 27, avec maintien en traction 28.

La rosette peut être interrogée de diverses manières: l'interrogation temporelle, fréquentielle ou en cohérence. Ces solutions sont cependant peu utilisées dans la pratique du fait de la complexité de l'électronique de détection et la solution consiste plutôt à employer le multiplexage optique en longueur d'onde.

Le principe du multiplexage optique a été déjà décrit dans de nombreux brevets et publications. Citons, en particulier, le brevet WO 86/01286 déposé par G. Meltz, W.H. Glenn et E. Snitzer, ou bien encore le brevet US 5191458 déposé par D.R. Lyons et S.M. Reich.

Le principe de l'interrogation en longueur d'onde a déjà été décrit : soit le capteur est passif, alors il se contente de renvoyer un signal optique (de spectre étroit) en réflexion, soit le capteur est actif et alors il réémet son propre rayonnement après avoir été stimulé par un faisceau optique d'interrogation.

Ce dernier cas (capteur actif) correspond à une conception de capteur laser dans lequel les contraintes modifient la condition de contre-réaction (le plus souvent spectralement) d'un laser à fibre en particulier. Un tel dispositif est décrit dans certaines publications dont la publication récente de S. Melle et al. (IEEE Phot. Tech. Lett., vol. 5, 1993, pages 263-266).

Dans le cas d'un capteur passif, soit une source spectrale large (diode superluminescente), soit un laser accordable (de largeur spectrale inférieure à celle du réseau) servent de faisceau optique d'interrogation. La détection rapide emploie, le plus souvent, un interféromètre de Fabry-Perot accordable mais d'autres solutions sont également exploitables (interféromètre de Mach-Zehnder, ..).

Deux exemples de circuits de multiplexage optique sont illustrés sur les figures 8A et 8B. Ces figures décrivent un réseau de capteurs à rosettes de Bragg interrogés en réflexion et le traitement du signal associé, respectivement pour une modulation en longueur d'onde d'interrogation (figure 8A) et pour une modulation en longueur d'onde de lecture ("scanning") (figure 8B).

Sur la figure 8A est représentée une source optique modulable en longueur d'onde 30, reliée à un coupleur optique 31, en fibres optiques dont une branche est reliée à un photodétecteur 32 suivi d'un module d'acquisition 33 et d'un modulateur 34, lui-même relié à la source 31. Chaque rosette est composée de trois jauges J1, J2 et J3.

Sur la figure 8B une source optique à large bande spectrale 36 est reliée à un coupleur optique 37 en fibres optiques, dont la seconde branche est reliée à un interféromètre de Fabry-Perot accordable 38 et à un module d'acquisition 39. Sur cette figure sont également représentées les rosettes R1 et R2 et les jauges J1, J2 et J3.

La manière dont sont reliés les réseaux de Bragg sur la ligne de mesure (ici, en série) n'est donnée qu'à titre indicatif. Toute topologie est envisageable au niveau de chaque jauge.

Ces techniques de démultiplexage peuvent également être étendues aux procédés d'asservissement permettant de "suivre" en temps réel les déplacements spectraux des réseaux de Bragg comme l'ont montré A.D. Kersey, T.A. Berkoff et W.W. Morey (Opt. Lett., vol. 18, n° 16, 1993, pages 1370-1372).

Le circuit comporte autant de rosettes que de points de mesure. Les figures 8A et 8B représentent deux rosettes à titre d'exemple.

La rosette définie dans l'invention peut exploiter un phénomène physique d'accord de phase (réseaux de Bragg) mais aussi l'interférométrie à deux ondes (Michelson et Mach-Zehnder) et à ondes multiples (Fabry-Perot).

Après avoir montré la mise en oeuvre d'une telle rosette à réseaux de Bragg, ainsi que son traitement du signal associé, on va à présent compléter la mise en oeuvre d'une telle rosette exploitant spécifiquement l'interférométrie.

On a décrit précédemment le problème de la sensibilité croisée à la température et aux contraintes et on a montré, dans le cas des réseaux de Bragg, comment supprimer l'effet dû à la température pour ne mesurer que l'effet dû à la contrainte principale longitudinale recherchée et ceci, indépendamment de la position de la rosette dans son plan si celle-ci est constituée de trois jauges.

Les rosettes composées de capteurs interférométriques sont soumises aux mêmes problèmes de sensibilité croisée aux contraintes et à la température. Ainsi le dispositif de rosette optique de l'invention peut exploiter des réseaux de Bragg ou des interféromètres.

Dans ce qui suit, on va détailler le comportement des transducteurs interférométriques, leurs réalisations pratiques ainsi que le traitement du signal qui leur est associé.

**Comportement des transducteurs interférométriques d'allongement**

Contrairement aux réseaux de Bragg où l'information est traduite par une longueur d'onde, les transducteurs interférométriques fournissent une information sous forme d'un déphasage optique. L'interféromètre a alors pour but de traduire cette variation de phase en une variation d'intensité et c'est cette variation d'intensité qui est effectivement observée afin d'en déduire la variation de phase, la loi de conversion de phase en intensité étant connue et dépendante du type d'interféromètre.

Ce type de rosette optique nécessite donc l'emploi d'une source optique de longueur de cohérence supérieure à la différence de chemin optique caractéristique de l'interféromètre (typiquement de l'ordre de quelque nm à quelques cm). Les sources optiques les plus utilisées sont alors des diodes laser en vertu de leur cohérence temporelle suffisante et de leur intégrabilité compatible avec les applications de capteurs à fibres optiques.

La loi générale reliant le déphasage induit aux paramètres physiques à mesurer (pression, température et contraintes) s'exprime sous la forme :

$$\frac{\Delta\phi}{L} = x_t.dT + x_\varepsilon.d\varepsilon + x_p.dP \tag{10}$$

où L est la différence de longueurs entre le bras de référence et le bras de mesure pour les interféromètres de Mach-Zehnder et de Michelson ou bien la longueur de cavité résonante dans le cas de l'interféromètre de Fabry-Perot. Cette longueur correspond au déséquilibre de chemin géométrique.

Pour une fibre monomode en silice à une longueur d'onde de 850 nm, les coefficients expérimentaux ont pour valeurs moyennes (indicatives) :

$x_T \approx 100$ Rad/m.K
$x_\varepsilon \approx 10^4$ Rad/m.$\varepsilon$
$x_P \approx$ -5.$10^5$ Rad/m.Pa

(l'allongement relatif s'écrit :

$$\varepsilon = \frac{\Delta l}{l}$$

où $\Delta l$ est l'allongement et $l$ la longueur initiale, $1\varepsilon$ correspond à 100% d'allongement relatif).

Suivant le type d'interféromètre, les rosettes sont conçues différemment et la loi d'intensité qui en résulte est spécifique.

Une fois les déphasages $\Delta\phi_1$, $\Delta\phi_2$ et $\Delta\phi_3$ des jauges respectivement 1, 2 et 3 mesurés, la contrainte est obtenue en appliquant à nouveau la formule (4) en substituant le terme $\Delta\phi_i - \Delta\phi_i^0$ au terme $\Delta\lambda_i = \lambda_i - \lambda_i^0$ et $\chi_\varepsilon.L$ au terme $\xi_1$ dans les formules (3), (5), (6), (7) et (8).

## Rosette à interféromètres de Mach-Zehnder

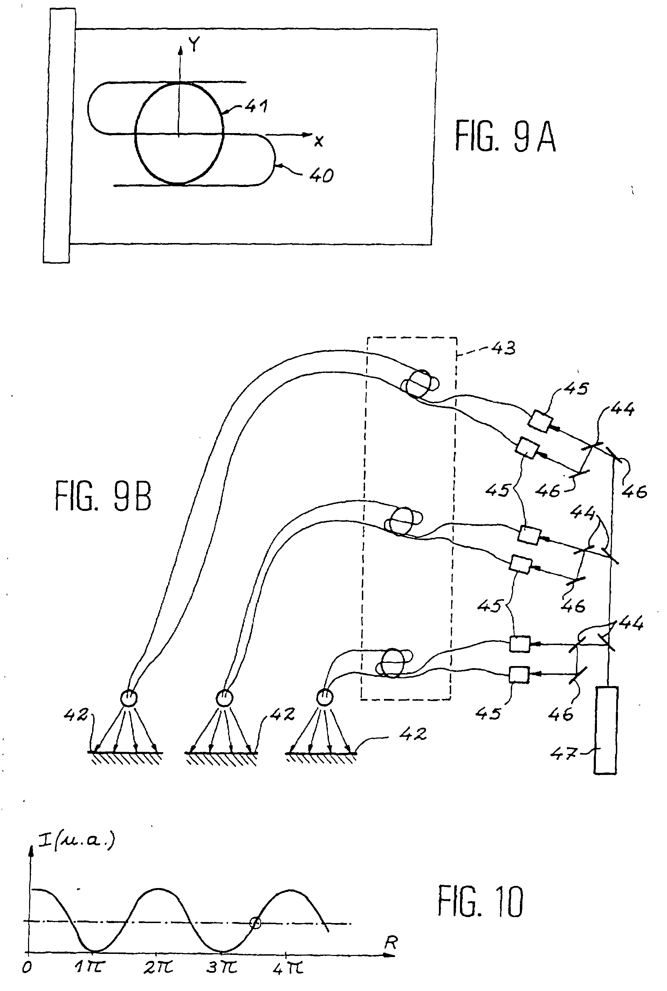

Une rosette de ce type est décrite dans la publication de J.S. Sirkis et C.E. Taylor, Exp. Mech., 1988, pages 170-176 et de J.S. Sirkis et H.W. Haslach, J. of Light. Tech., vol 8, n° 10, 1990, pages 1497-1503. Sa description est illustrée sur la figure 9A et sa conception ainsi que l'électronique d'acquisition sont décrites dans ces publications.

Cette rosette est conçue pour déterminer une contrainte longitudinale seulement. Le principe consiste à choisir une configuration géométrique telle que représentée sur la figure 9A afin que la différence de chemins optiques soit proportionnelle à la contrainte appliquée selon l'axe X de la figure. Les deux faisceaux émergeant des deux fibres (de mesure et de référence) sont projetés sur un écran comme représenté sur la figure 9B, afin d'analyser la figure d'interférences (principe des fentes d'Young, les coeurs des deux fibres jouant le rôle des fentes).

La figure 9A illustre une jauge à interféromètre de Mach-Zehnder pour la mesure d'une contrainte longitudinale (d'après Sirkis et Taylor) : respectivement la constitution et le montage expérimental. La figure 9B illustre une rosette à interféromètres de Mach-Zehnder.

Sur la figure 9A on a une fibre de mesure 40 et une fibre de référence 41 collée en cercle. Sur la figure 9B on a un écran 42, une poutre 43, une lame séparatrice 44, des objectifs de microscope 45, des miroirs 46 et un laser 47.

La loi d'intensité et le traitement du signal des rosettes à interféromètres de Mach-Zehnder sont les mêmes que pour les rosettes à interféromètres de Michelson que l'on va maintenant décrire.

## Rosette à interféromètres de Michelson

Cette rosette et sa réalisation sont décrites dans la publication de R.M. Measures intitulée "Fiber Optic Fabry-Perot Strain Rosettes", Smart. Mater. Struct., vol. 1, 1992, pages 227-232. Elle est représentée sur la figure 2B.

L'interférométrie est réalisée entre chaque faisceau optique de mesure réfléchi dans les trois bras de mesure avec le signal réfléchi provenant du bras de référence (non soumis aux contraintes à déterminer).

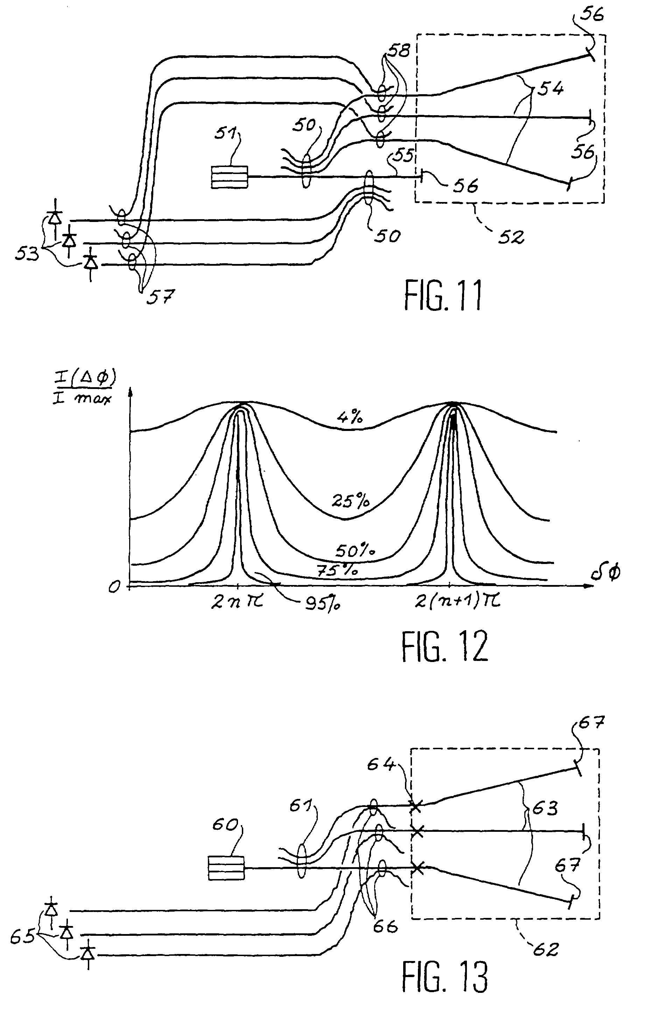

Par construction, le déphasage $\Delta\phi$ induit par les contraintes et la température peut être choisi faible (inférieur à $\pi$) de sorte que l'évolution de l'intensité s'effectue sur le flanc de la courbe de transfert de l'interféromètre de Michelson et de Mach-Zehnder, comme représenté sur la figure 10 qui illustre une courbe de l'intensité en fonction du retard optique R (déphasage), avec un interféromètre à deux ondes.

Pour cela, la différence de longueur entre le bras de mesure et le bras de référence doit être de l'ordre de quelques mm à quelques cm.

La loi de conversion des interféromètres de Michelson et de Mach-Zehnder est :

$$I_i = \frac{I_{oi}}{2} \cdot \left[ 1 + m.\sin^2\left(\frac{\Delta\phi_i}{2}\right) \right] \qquad (11)$$

où $i$ = 1 ou 2 ou 3 selon le bras de mesure interrogé et $m$ est le contraste (visibilité) des franges. $m$ est un paramètre expérimental (positif et inférieur à 1) qui dépend des intensités respectives du faisceau de référence et du faisceau de mesure établi lors de la construction de la rosette.

$I_i$ est l'intensité observée fonction du déphasage $\Delta\phi_i$ (projeté sur l'écran dans le cas de la figure 9B) et $I_{oi}$ est l'intensité laser injecté. L'intensité observée est directement convertie en courant par une photodiode de mesure dont le courant peut être mesuré par un picoampèremètre ou par un amplificateur (circuit à phototransistor) tel que décrit dans la publication de Sirkis et Taylor.

La sensibilité des jauges est maximale à un point de fonctionnement situé à mi-hauteur (voir figure 10); il est cependant difficile d'ajuster le point de fonctionnement simultanément pour les trois jauges (en changeant la longueur d'onde), d'où la nécessité d'un compromis.

Une autre solution, employée par R.M. Measures (publication déjà citée plus haut) et J.S. Sirkis consiste à réaliser un comptage de franges si la différence de chemins optiques est importante (de l'ordre du mètre et plus). Le problème tient à ce que le comptage ne procure qu'une mesure absolue et non une mesure relative, ce qui implique que le signe de la contrainte soit connu a priori, ce qui est rarement le cas dans la pratique.

Une solution, développée par la Société CSO en France consiste alors à scinder le faisceau de mesure en deux, l'un observé directement, l'autre traversant un parcours optique correspondant à un déphasage de quart d'onde. Ainsi, deux fonctions d'interférence sont observées en quadrature, ce qui permet de lever l'indétermination concernant le signe de la contrainte appliquée.

Cette solution a été adoptée par J.S. Sirkis qui a placé deux photodiodes proches l'une de l'autre sur l'écran sur lequel les fentes d'Young sont projetées. Ainsi, en observant les deux signaux légèrement en déphasage émis par chacune des deux photodiodes, il est possible de déterminer le sens de propagation des franges. Le compteur compte si le premier détecteur déclenche sur une frange avant le deuxième et réciproquement, le compteur décompte si le deuxième déclenche avant le premier.

Pour des raisons de cohérence temporelle, un seul laser doit être utilisé dans les deux montages (Mach-Zehnder et Michelson).

La mise en réseau de plusieurs rosettes se fait en répétant le motif illustré sur la figure 11, en plaçant plusieurs coupleurs 1x4 (50) en série, ou en associant autant de lasers 51 que de rosettes 52. Sur cette figure sont également représentées des photodiodes 53, des fibres de mesures 54, une fibre référence 55, des revêtements réfléchissants (multicouche électrique) 56, et des coupleurs 1x2 (57 et 58). De même, les miroirs peuvent être avantageusement réalisés par des réseaux de Bragg photoinscrits de longueurs d'onde caractéristiques recouvrant la longueur d'onde du laser utilisé.

### Rosette à interféromètres de Fabry-Perot

Cette rosette est illustrée sur la figure 2C. Sa conception est décrite dans la publication de R.M. Measures citée plus haut. L'interférométrie est réalisée sur toute la longueur sensible de chaque jauge (c'est-à-dire, entre la soudure semi-réflectrice et le miroir déposé en bout de fibre).

La variation de phase induite (par pression, température ou contraintes) produit une variation d'intensité transmise selon la fonction d'Airy, bien connue, représentée sur la figure 12. Cette figure illustre les fonctions de transfert typiques d'un interféromètre de Fabry-Perot pour plusieurs coefficients R=R1=R2.

$$\frac{J(\Delta\phi)}{I_0} = \frac{T_1 \cdot T_2}{\left[1 - \sqrt{R_1 \cdot R_2}\right]^2 + 4\sqrt{R_1 \cdot R_2} \cdot \sin^2\left(\frac{\Delta\phi}{2}\right)} \qquad (12)$$

où $I_0$ est l'intensité incidente (provenant de la diode). $R_1$ et $R_2$ sont les coefficients de réflexion de la soudure semi-reflectrice et de la couche diélectrique. $T_1$ et $T_2$ sont leurs transmissions respectives, compte tenu des pertes par absorption $\gamma_1$ et $\gamma_2$ telles que : $T_1 + R_1 + \gamma_1 = 1$ et $T_2 + R_2 + \gamma_2 = 1$. L'intensité observée en réflexion correspond au complément de l'intensité $I_0$ de la formule (12).

La connexion optique est illustrée sur la figure 13, avec une source optique (diode laser) 60, un coupleur 1x3 (61), une rosette 62, des fibres de mesure 63, des soudures semi-réflectrices 64, des photodiodes 65 et des coupleurs optiques 1x2 (66).

Suivant les deux principes énoncés précédemment (évolution de l'intensité sur le flanc de la courbe de réponse ou bien comptage de franges), les mêmes principes de détection que pour les rosettes d'interféromètres de Mach-Zehnder et de Michelson peuvent être appliqués.

### Revendications

**1.** Micro-système optique de type rosette de jauges de contraintes à guides diélectriques destiné à mesurer un ensemble de contraintes appliquées à une pièce, ledit micro-système comprenant au moins une rosette formée d'au moins deux jauges de contraintes à guides diélectriques (J1, J2, J3) d'orientations connues et non parallèles, caractérisé en ce que les jauges de contraintes sont des réseaux de Bragg (RB$_1$, RB$_2$, RB$_3$), en ce que la pièce est une pièce soumise à une contrainte d'une seule composante contenue dans le plan des jauges, et en ce qu'un circuit de calcul, qui délivre un résultat indépendant de la température, permet de déterminer ladite contrainte par résolution du système d'équations suivant :

$$
\begin{cases}
\lambda_1 - \lambda_1^0 = \xi_1 \cdot \left[ d + r.\cos(2.\alpha) \right] + \xi_2 \cdot (T - T_0) \\
\lambda_2 - \lambda_2^0 = \xi_1 \cdot \left[ d + r.\cos(2.\alpha - 2.\beta_2) \right] + \xi_2 \cdot (T - T_0) \\
\lambda_3 - \lambda_3^0 = \xi_1 \cdot \left[ d + r.\cos(2.\alpha + 2.\beta_1) \right] + \xi_2 \cdot (T - T_0)
\end{cases}
$$

$\lambda_1, \lambda_2$ et $\lambda_3$ étant les longueurs d'onde caractéristiques respectives des trois réseaux de Bragg constituant la rosette, ces longueurs d'onde étant très proches les unes des autres, et $\lambda_1^0, \lambda_2^0$ et $\lambda_3^0$ les longueurs d'onde caractéristiques en l'absence de déformations et à une température $T_0$ de référence, $\xi_1$ étant un coefficient reliant la longueur d'onde caractéristique à la déformation et $\xi_2$ un coefficient de dilatation thermique, les deux angles $\beta_1$ et $\beta_2$ quelconques mais connus et non nuls modulo $\pi$, caractérisant la rosette et $\alpha$ étant l'angle que fait l'orientation de la contrainte principale à déterminer avec l'orientation de la jauge de contraintes de référence de la rosette, les paramètres $d$ et $r$ étant respectivement la demi-somme et la demi-différence des déformations principales à déterminer.

2. Micro-système optique selon la revendication 1, caractérisé en ce que les jauges de contrainte sont des réseaux de Bragg photo-inscrits ($RB_1$, $RB_2$, $RB_3$).

3. Micro-système optique selon la revendication 1, caractérisé en ce que les réseaux de Bragg sont placés à 120° ou à 45° les uns des autres.

4. Micro-système optique selon la revendication 1, caractérisé en ce que ces trois réseaux sont inscrits simultanément ou successivement par le même faisceau optique d'insolation.

5. Micro-système optique selon la revendication 1, caractérisé en ce que ces trois réseaux ne sont pas inscrits simultanément et peuvent présenter des longueurs d'onde caractéristiques différentes.

6. Micro-système optique selon l'une quelconque des revendications précédentes, caractérisé en ce que les guides diélectriques sont des fibres optiques.

7. Micro-système optique selon la revendication 1, caractérisé en ce qu'il comprend au moins un guide diélectrique, à maintien ou non de polarisation, dans lequel sont incorporées les jauges de contraintes.

8. Micro-système optique selon la revendication 7, caractérisé en ce que les jauges de contrainte sont des transducteurs d'allongement collés en surface, ou noyés au sein d'un matériau support localement plan dont les déformations sont à déterminer.

9. Micro-système optique selon la revendication 7, caractérisé en ce que les transducteurs sont des réseaux de Bragg qui fonctionnent par effet d'accord de phase, et en ce que les guides sont monomodes et photosensibles, et avantageusement monomodes.

10. Micro-système optique selon la revendication 7, caractérisé en ce que les transducteurs fonctionnent par effet interférométrique, et en ce que les guides sont monomodes.

11. Micro-système optique selon la revendication 1, caractérisé en ce que chaque jauge de contraintes mesure une variation de chemin optique, fonction de la contrainte à mesurer, qui induit un décalage spectral.

12. Micro-système optique selon la revendication 1, caractérisé en ce que chaque jauge de contraintes mesure une variation du chemin optique, fonction de la contrainte à mesurer, qui induit un décalage de franges d'interférences.

13. Micro-système optique selon l'une quelconque des revendications précédentes, caractérisé en ce que les jauges constituant la rosette sont placées en série sur le même guide diélectrique.

**14.** Micro-système optique selon l'une quelconque des revendications 1 à 12, caractérisé en ce qu'il a une configuration du type interféromètre de Sagnac équilibré exploitant un coupleur à 50 % de réflexion dans la bande spectrale d'utilisation, cette configuration étant constituée d'un seul plan de guide et permettant d'inclure une rosette entre deux plans d'un matériau.

**Patentansprüche**

**1.** Optisches Mikrosystem des Typs Rosettenspannungslehre mit dielektrischen Leitern zur Messung einer Gruppe bzw. Gesamtheit von Spannungen, die auf ein Teil wirken, wobei dieses Mikrosystem wenigstens eine Rosette umfasst, gebildet durch wenigstens zwei Spannungslehren mit dielektrischen Leitern (J1, J2, J3) bekannter und nicht paralleler Ausrichtungen,
**dadurch gekennzeichnet,**
dass die Spannungslehren Bragg-Gitter ($RB_1$, $RB_2$, $RB_3$) sind, und dadurch, dass das Teil ein Teil ist, das durch eine Spannung mit einer einzigen Komponente belastet wird, enthalten in der Ebene der Lehren, und dadurch, dass eine Rechenschaltung, die ein von der Temperatur unabhängiges Resultat liefert, ermöglicht, die genannte Spannung durch Auflösung des folgenden Systems von Gleichungen zu bestimmen:

$$\begin{cases} \lambda_1 - \lambda_1^0 = \xi_1.[d + r.\cos(2.a)] + \xi_2.(T - T_0) \\ \lambda_2 - \lambda_2^0 = \xi_1.[d + r.\cos(2.\alpha - 2.\beta_2)] + \xi_2.(T - T_0) \\ \lambda_3 - \lambda_3^0 = \xi_1.[d + r.\cos(2.\alpha + 2.\beta_1)] + \xi_2.(T - T_0) \end{cases}$$

wobei $\lambda_1, \lambda_2$ und $\lambda_3$ jeweils charakteristische Wellenlängen der drei die Rosette bildenden Bragg-Gitter sind und diese Wellenlängen sehr nahe beieinanderliegen, und $\lambda_1^0, \lambda_2^0$ und $\lambda_3^0$ die charakteristischen Wellenlängen bei Fehlen von Verformungen und bei einer Bezugstemperatur $T_0$ sind, wobei $\xi_1$ ein Koeffizient ist, der die charakteristische Wellenlänge mit der Verformung verknüpft, und $\xi_2$ ein Wärmeausdehnungskoeffizient ist, die beiden Winkel $\beta_1$ und $\beta_2$, beliebig aber bekannt und nicht null modulo $\pi$, die Rosette charakterisieren und $\alpha$ der Winkel ist, den die Richtung der zu bestimmenden Hauptspannung mit der Ausrichtung der Bezugsspannungslehre der Rosette bildet, wobei die Parameter *d* und *r* jeweils die Halbsumme und die Halbdifferenz der zu bestimmenden Hauptverformungen sind.

**2.** Optisches Mikrosystem nach Anspruch 1, dadurch gekennzeichnet, dass die Spannungslehren photoinduzierte Bragg-Gitter ($RB_1$, $RB_2$, $RB_3$) sind.

**3.** Optisches Mikrosystem nach Anspruch 1, dadurch gekennzeichnet, dass die Bragg-Gitter um 120° oder um 45° gegeneinander versetzt sind.

**4.** Optisches Mikrosystem nach Anspruch 1, dadurch gekennzeichnet, dass die drei Gitter gleichzeitig oder nacheinander durch dasselbe optische Bestrahlungsbündel induziert werden.

**5.** Optisches Mikrosystem nach Anspruch 1, dadurch gekennzeichnet, dass die drei Gitter nicht gleichzeitig induziert werden und unterschiedliche charakteristische Wellenlängen haben können.

**6.** Optisches Mikrosystem nach einem der vorangehenden Ansprüche, dadurch gekennzeichnet, dass die dielektrischen Leiter optische Fasern sind.

**7.** Optisches Mikrosystem nach Anspruch 1, dadurch gekennzeichnet, dass es wenigstens einen dielektrischen Leiter umfasst, mit Polarisationsaufrechterhaltung oder nicht, in den die Spannungslehren integriert sind.

**8.** Optisches Mikrosystem nach Anspruch 7, dadurch gekennzeichnet, dass die Spannungslehren Dehnungswandler bzw. -transducer sind, auf die Oberfläche geklebt oder eingebettet in ein örtlich ebenes Trägermaterial, dessen Verformungen zu bestimmen sind.

9. Optisches Mikrosystem nach Anspruch 7, dadurch gekennzeichnet, dass die Transducer Bragg-Gitter sind, die mittels Phasenanpassung arbeiten, und dadurch, dass die Leiter vom Ein-Moden-Typ und photosensibel sind und vorzugsweise vom Ein-Moden-Typ.

10. Optisches Mikrosystem nach Anspruch 7, dadurch gekennzeichnet, dass die Transducer mittels interferometrischen Effekts arbeiten, und dadurch, dass die Leiter vom Ein-Moden-Typ sind.

11. Optisches Mikrosystem nach Anspruch 1, dadurch gekennzeichnet, dass jede Spannungslehre eine Veränderung des optischen Wegs misst, abhängig von der zu messenden Spannung, die eine Spektralverschiebung bewirkt.

12. Optisches Mikrosystem nach Anspruch 1, dadurch gekennzeichnet, dass jede Spannungslehre eine Veränderung des optischen Wegs misst, abhängig von der zu messenden Spannung, die eine Interferenzstreifenverschiebung bewirkt.

13. Optisches Mikrosystem nach einem der vorangehenden Ansprüche, dadurch gekennzeichnet, dass die die Rosette bildenden Lehren in demselben dielektrischen Leiter in Serie angeordnet sind.

14. Optisches Mikrosystem nach einem der Ansprüche 1 bis 12, dadurch gekennzeichnet, dass es eine Konfiguration des Typs abgeglichenes Sagnac-Interferometer mit einem Koppler mit 50% Reflexion in dem Nutzungsspektralband gibt, wobei diese Konfiguration durch eine einzige Leiterebene gebildet wird und ermöglicht, eine Rosette zwischen zwei Ebenen eines Materials einzuschließen.

**Claims**

1. Rosette-type, optical microsystem of strain gauges having dielectric guides for measuring a system of strains applied to a part, said microsystem comprising at least one rosette formed by at least two strain gauges having dielectric guides (J1, J2, J3) which are not parallel and have known orientations, characterized in that the strain gauges are Bragg networks ($RB_1$, $RB_2$, $RB_3$), in that the part is subject to a strain having a single component contained in the plane of the gauges and in that a calculating circuit, which delivers a result independent of the temperature, makes it possible to determine said strain by solving the following system of equations:

$$\begin{cases} \lambda_1 - \lambda_1^0 = \xi_1 . \left[ d + r.\cos(2.\alpha) \right] + \xi_2 . (T - T_0) \\ \lambda_2 - \lambda_2^0 = \xi_1 . \left[ d + r.\cos(2.\alpha - 2.\beta_2) \right] + \xi_2 . (T - T_0) \\ \lambda_3 - \lambda_3^0 = \xi_1 . \left[ d + r.\cos(2.\alpha + 2.\beta_1) \right] + \xi_2 . (T - T_0) \end{cases}$$

$\lambda_1$, $\lambda_2$ and $\lambda_3$ being respective wavelengths of three Bragg networks constituting the rosette, said wavelengths being very close to one another and $\lambda_1$, $\lambda_2$ and $\lambda_3$ are the characteristic wavelengths in the absence of deformations and at a reference temperature To, $\zeta_1$ being a coefficient linking the characteristic wavelength with the deformation and $\zeta_2$ a thermal expansion coefficient, the two angles $\beta_1$ and $\beta_2$ being of a random, but known nature and non-zero modulo $\Pi$, characterizing the rosette and $\alpha$ being the angle formed by the orientation of the main strain to be determined with the orientation of the rosette reference strain gauge, the parameters d and r being respectively the half-sum and half-difference of the main deformations to be determined.

2. Optical microsystem according to claim 1, characterized in that the strain gauges are photo-inscribed Bragg networks ($RB_1$, $RB_2$, $RB_3$).

3. Optical microsystem according to claim 1, characterized in that the Bragg networks are positioned at 120 or 45° from one another.

4. Optical microsystem according to claim 1, characterized in that the said three networks are simultaneously or successively inscribed by the same optical irradiation beam.

**5.** Optical microsystem according to claim 1, characterized in that the three networks are not simultaneously inscribed and can have different characteristic wavelengths.

**6.** Optical microsystem according to any one of the preceding claims, characterized in that the dielectric guides are optical fibres.

**7.** Optical microsystem according to claim 1, characterized in that it comprises at least one dielectric guide, with or without polarization maintenance, in which are incorporated the strain gauges.

**8.** Optical microsystem according to claim 7, characterized in that the elongation transducers are surface-bonded or are embedded within the locally planar, support material, whose deformations are to be determined.

**9.** Optical microsystem according to claim 7, characterized in that the transducers are Bragg networks, which function by the phase tuning effect, and in that the guides are monomode and photosensitive, and advantageously monomode.

**10.** Optical microsystem according to claim 7, characterized in that the transducers function by an interferometric effect and in that the guides are monomode.

**11.** Optical microsystem according to claim 1, characterized in that each strain gauge measures an optical path variation, which is a function of the strain to be measured and which induces a spectral displacement.

**12.** Optical microsystem according to claim 1, characterized in that each strain gauge measures an optical path variation, which is a function of the strain to be measured and which induces a displacement of the interference fringes.

**13.** Optical microsystem according to any one of the preceding claims, characterized in that the gauges constituting the rosette are positioned in series on the same dielectric guide.

**14.** Optical microsystem according to any one of the claims 1 to 12, characterized in that it has a configuration of a balanced Sagnac interferometer type using a 50% reflection coupler in the spectral band of use, said configuration being constituted by a single guide plane and permitting the inclusion of a rosette between two planes of a material.

RB1        RB2        RB3

FIG. 1A

FIG. 1B

$I(u.a.)$

$\lambda(u.a)$

FIG. 1C

$I(u.a.)$

$\lambda(u.a.)$

FIG. 1D

$I(u.a.)$

$\lambda(u.a.)$

$\lambda B1$        $\lambda B3$
        $\lambda B2$

18

FIG. 2A

FIG. 2B

FIG. 2C

FIG. 3A

FIG. 3B

FIG. 3C

FIG. 4

FIG. 5A

FIG. 5B

FIG. 5C

FIG. 6

FIG. 7

FIG. 8A

FIG. 8B

FIG. 9 A

FIG. 9 B

FIG. 10

FIG. 11

$$\frac{I(\Delta\phi)}{I\,max}$$

4%

25%

50%

75%

0          $2n\pi$     95%     $2(n+1)\pi$     $\delta\phi$

FIG. 12

FIG. 13